Europäisches Patentamt

European Patent Office

Office européen des brevets

(11) Veröffentlichungsnummer: **0 382 942**

**A2**

(12) **EUROPÄISCHE PATENTANMELDUNG**

(21) Anmeldenummer: **89123850.3**

(51) Int. Cl.5: **B23B 23/00**

(22) Anmeldetag: **22.12.89**

(30) Priorität: **15.02.89 DE 3904569**

(43) Veröffentlichungstag der Anmeldung:
**22.08.90 Patentblatt 90/34**

(84) Benannte Vertragsstaaten:
**CH DE FR GB IT LI SE**

(71) Anmelder: **Boehringer Werkzeugmaschinen GmbH**
**Stuttgarter Strasse 50 Postfach 220**
**D-7320 Göppingen(DE)**

(72) Erfinder: **Kuhn, Siegfried**
**Gammelhauserstrasse 8**
**D-7321 Dürnau(DE)**
Erfinder: **Mühlich, Werner**
**Gneisenaustrasse 1**
**D-7334 Süssen(DE)**
Erfinder: **Räder, Robert**
**St.-Galler-Strasse 17**
**D-7320 Göppingen(DE)**
Erfinder: **Ritz, Otmar, Dipl.-Ing.**
**Hauptstrasse 121**
**D-7321 Wangen(DE)**
Erfinder: **Schulten, Hermann**
**Brückenstrasse 46**
**D-7321 Birenbach(DE)**
Erfinder: **Unruh, Manfred, Dipl.-Ing. (FH)**
**Hohenstaufenstrasse 52**
**D-7320 Göppingen(DE)**

(74) Vertreter: **Vogeser, Werner, Dipl.-Ing. et al**
**Patentanwälte + Rechtsanwälte Hansmann,**
**Vogeser, Boecker & Alber**
**Albert-Rosshaupter-Strasse 65**
**D-8000 München 70(DE)**

(54) **Reitstock mit Auswerfer.**

(57) Die Erfindung betrifft einen Reitstock für Drehmaschinen, bei dem die Pinole eine zentrale Durchgangsöffnung aufweist, in der ein stabförmiger Auswerfer axial beweglich und hydraulisch beaufschlagt
ist, um die in der Pinole gelagerte Zentrierspitze
automatisch auswerfen zu können.

Die Erfindung betrifft linear wirkende Spannmittel an Werkzeugmaschinen, insbesondere Reitstöcke an Drehmaschinen. Üblicherweise ist ein Reitstock auf einer Drehmaschine entlang geeigneter Führungen in Z-Richtung auf das Werkstück zu bzw. von diesem weg verfahrbar. Soll nun ein Werkstück zwischen Spitzen gespannt werden, so wird der Reitstock bis nahe an das Werkstück herangefahren, auf dem Bett der Drehmaschine festgeklemmt und die Pinole aus dem Grundkörper des Reitstockes heraus gegen das zu spannende Werkstück gepreßt. Dabei ist am vorderen Ende der Pinole eine Zentrierspitze oder ein anderes Spannteil befestigt, meist durch Einsetzen in einen Kegelsitz der Pinole.

Abhängig von den zu spannenden Werkstücken, sind dabei unterschiedliche Zentrierspitzen bzw. Spannteile notwendig. Der Wechsel der Zentrierspitze wird üblicherweise bisher manuell durchgeführt, da die Zentrierspitze nach Lösen der Werkstückspannung im Kegelsitz der Pinole fest gepreßt ist, und beispielsweise durch das Einführen eines Keiles hinter der rückwärtigen Stirnseite der Zentrierspitze oder eine andere Kraftbeaufschlagung gelöst werden muß. Gleichzeitig muß die sich plötzlich lösende Zentrierspitze gehalten werden, um ein Herabfallen auf die Werkzeugmaschine zu verhindern. Ebenso muß die neu einzusetzende Zentrierspitze mit ausreichender Kraft in den Kegelsitz der Pinole eingesetzt werden, um ein Herausfallen vor dem Ansetzen an der Zentrierbohrung des Werkstückes zu vermeiden.

Im Zuge der Automatisierung von Drehmaschinen ist es wünschenswert, auch Rüstvorgänge, also etwa das Einsetzen oder Wechseln einer Zentrierspitze, zu automatisieren.

Die herkömmlichen manuellen Methoden sind für eine Automatisierung ungeeignet, da beispielsweise das seitliche Eintreiben eines Keiles oder ähnliches umständliche externe und damit ggfs. bei der Bearbeitung des Werkstücks im Wege stehende Vorrichtungen erfordern würde und darüber hinaus auch durch die ständig wechselnde Position des Reitstockes selbst schwierig wäre.

Es ist daher der Zweck der Erfindung, eine Vorrichtung zum Lösen und ggfs. auch zum Spannen des Spannteiles in der Pinole zu schaffen, die gut zur automatischen Ansteuerung geeignet ist.

Hierzu ist es beispielsweise wünschenswert, daß sich diese Vorrichtung etwa im Inneren des Reitstockes befindet und bei geringem baulichen Aufwand zur Reduzierung der Störanfälligkeit nur einfache Bewegungen durchzuführen sind.

Dies wird dadurch erreicht, daß der Kegelsitz am vorderen Ende der Pinole, zum Einsetzen der Zentrierspitze, in eine in der Längsachse der Pinole liegende Durchgangsöffnung mit vorzugsweise rundem Querschnitt übergeht. In dieser Durchgangsöffnung ist ein Auswerfer axial verschiebbar geführt, der durch Vorschieben gegen die Rückseite der Zentrierspitze drückt und bei Aufbringen einer genügend hohen Kraft diese aus dem Kegelsitz heraus nach vorne wegpreßt. Der Auswerfer wird vorzugsweise hydraulisch beaufschlagt, und ist so ausgebildet, daß er im Ruhezustand in einer zurückgezogenen Position gehalten wird. Deshalb weist dieser Auswerfer an seinem vorderen Ende eine verbreiterte Stirnfläche auf, die an einer Schulter der Durchgangsöffnung in der zurückgezogenen Position anliegt. Das rückwärtige Ende des Auswerfers ragt hinten aus der Pinole heraus und wird durch eine Druckfeder, die sich an der hinteren Stirnseite der Pinole abstützt, in dieser zurückgezogenen Position gehalten. Die Beaufschlagung des Auswerfers über einen Hydraulikkolben kann so erfolgen, daß der Auswerfer mit dem Hydraulikkolben in axialer Richtung fest verbunden ist. Da die Position der Pinole gegenüber dem Grundkörper des Reitstockes jedoch veränderbar ist, müssen hierfür die zuführenden Hydraulikleitungen flexibel gestaltet sein, oder der Hydraulikkolben selbst müsste eine ausreichende axiale Länge aufweisen.

Günstiger ist es jedoch, Auswerfer und die hydraulisch betätigte Druck- bzw. Zugeinheit getrennt auszubilden, so daß bei Druckbeaufschlagung der Hydraulikeinheit eine mit dieser axial fest verbundene Betätigungsstange zur Anlage an der rückseitigen Stirnseite des Auswerfers kommt, und diesen nach vorne bewegt.

Ob der Auswerfer nicht nur die Zentrierspitze aus der Pinole herausdrücken, sondern beim neu Einsetzen eine solche Zentrierspitze auch fest in den Kegelsitz der Pinole hineinziehen können muß, hängt davon ab, ob diejenige Handhabungseinheit, die bei automatischem Betrieb die Zentrierspitze aus der Pinole entnimmt, bzw. in diese einsetzt, dieses Einsetzen mit einer ausreichend großen Kraft durchführen kann.

Muß auch das Hereinziehen der Zentrierspitze in die Pinole mittels des Auswerfers realisierbar sein, so können die vordere Stirnfläche des Auswerfers und die rückwärtige Stirnfläche der Zentrierspitze beispielsweise so aneinander angepaßt sein, daß durch Relativdrehung des Auswerfers bezüglich der Zentrierspitze ein formschlüssiges Einrasten beider Teile nach Art eines Bajonettverschlusses stattfindet.

Ob die Drehung dabei von der Zentrierspitze vollzogen werden kann, hängt von der Art des Handhabungsgerätes für die Zentrierspitze ab. Die Drehung kann jedoch auch durch den Auswerfer vollzogen werden, indem an dessen rückwärtigem Ende Vorrichtungen vorgesehen sind, die eine Drehung um einen bestimmten Winkelbetrag zulassen.

Ein solcher hydraulisch betätigter Auswerfer ist besonders günstig im Zusammenhang mit einer Pinole, die nur einen geringen axialen Verfahrweg innerhalb des Grundkörpers des Reitstockes zurücklegen kann, was insbesondere bei solchen Reitstöcken der Fall ist, bei denen die Kraft, mit der die Pinole der Zentrierspitze gegen das Werkstück gepreßt wird, hydraulisch ebenfalls innerhalb des Reitstockes aufgebracht wird. Lediglich kurze Verfahrwege der Pinole innerhalb des Grundkörpers sind dabei von Interesse, da hierdurch lange axiale Verfahrwege der Hydraulikkolben vermieden werden.

Eine besonders vorteilhafte Ausführungsform gemäß der Erfindung ist im folgenden anhand der Figuren beispielhaft näher beschrieben:

Es zeigen

Fig. 1 eine Aufsicht auf den in der Symmetrieachse der Pinole aufgeschnittenen vorderen Teil des Reitstockes,

Fig. 2 eine ebensolche Darstellung des hinteren Teiles des Reitstockes,

Fig. 3 eine Schnittdarstellung entlang der Linie A-A der Fig. 1.

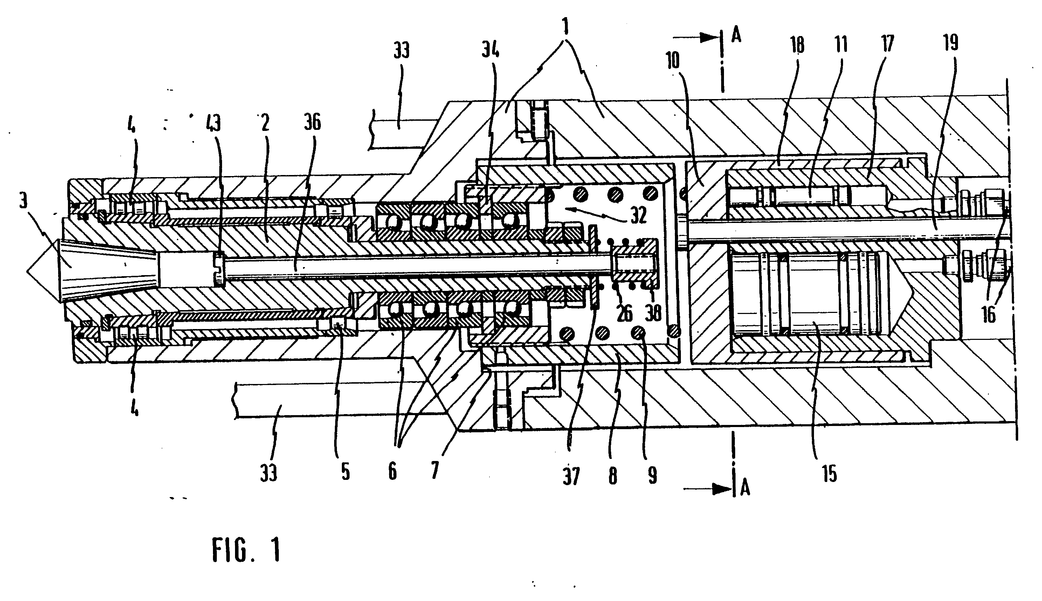

Fig. 1 zeigt ein Längsschnitt durch einen erfindungsgemäßen Reitstock mit dem Grundkörper 1 entlang der Längsachse der Pinole 2. Dabei sind im vorderen Teil der Darstellung die Führungen 33 zu sehen, entlang deren der gesamte Reitstock auf dem Bett der Drehmaschine verfahrbar ist. Bei dem gewünschten automatischen Betrieb wird deshalb der gesamte Reitstock auf diesen Führungen 33 an das Werkstück herangefahren, bis die in der Pinole 2 sitzende Zentrierspitze 3 das nicht dargestellte Werkstück berührt und durch dieses in den Grundkörper 1 hineingeschoben wird. Die Pinole 2 ist im vorderen Teil des Grundkörpers 1 in den beiden Rollenlagern 4 und 5 gelagert. Dabei handelt es sich um solche Rollenlager, bei denen die Wälzkörper durch den Innenring eine axiale Führung erfahren, dagegen auf dem Aussenring des Lagers in axialer Richtung verschiebbar sind. Im hinteren Bereich ist die Pinole 2 über Schulterkugellager 6 gegenüber der nicht drehenden Buchse 8 gelagert. Die in O-Anordnung eingebauten Schulterkugellager sind mit ihrem Innenring axial und radial fest mit der Pinole 2 verbunden und geben axiale Bewegungen der Pinole 2 auch an die Buchse 8 weiter, da ein mit der Buchse 8 axial fest verbundener Vorsprung 34 zwischen die Aussenringe der in O-Anordnung angestellten Schulterkugellager 6 hineinragt.

Die Buchse 8 und somit die gesamte mit der Pinole 2 axial fest, jedoch nicht mitdrehend ausgebildete Pinoleneinheit 32 wird im Ausgangszustand durch die Kraft einer Druckfeder 9 nach vorne gegen einen stirnseitigen Anschlag 7 des Grundkörpers 1 gepreßt. Wird die Zentrierspitze 3 samt der Pinole 2 und der Pinoleneinheit 32 durch das Heranfahren an das nicht dargestellte Werkstück in den Grundkörper 1 hineingeschoben, also gemäß der Fig. 1 nach rechts bewegt, so hebt die Buchse 8 vom Anschlag 7 des Grundkörpers 1 ab und bewegt über eine mit der Buchse 8 in axialer Richtung fest verbundene, nicht dargestellte Betätigungsstange wenigstens einen Endschalter, welcher das Abschalten des Reitstockantriebes, Festklemmen des Reitstockes auf dem Bett der Werkzeugmaschine sowie das Ausfahren der Pinole gegen das Werkstück bewirkt, wie im folgenden beschrieben:

Das Vorwärtsschieben der gesamten Pinoleneinheit 32 aus dem Grundkörper 1 heraus in Richtung auf das Werkstück erfolgt durch das Verschieben der Preßplatte 10 nach links, an der sich die Druckfeder 9 abstützt, die bestrebt ist, die Pinolenheit 32 nach links gegen den Anschlag 7 des Gehäuses und damit in die vorderste mögliche Position zu drücken. Diese Preßplatte 10 ist an ihrer Rückseite einstückig mit einem Zylinder 18 verbunden, der auf einem darin befindlichen Kolben 7 axial verschieblich geführt ist.

In diesem Kolben 17 befinden sich in entsprechend geformten Ausnehmungen, die in Richtung zur Preßplatte 10 hin offen sind, mehrere Hdraulikkolben 11 bis 15. Bei Beaufschlagen der hinter den Hydraulikkolben 11 bis 15 liegenden Hohlräume durch den Arbeitsdruck eines über di Hydrauliklietung 16 angelieferten Arbeitsmediums pressen einer oder mehrere dieser Hydraulikkolben 11 bis 15 die Preßplatte 10 vom Kolben 17 weg nach links. Da bereits der schwächste dieser Hydraulikkolben eine größere Kraft bewirkt, als es zum Zusammendrücken der Druckfeder 9 notwendig ist, wird hierdurch die gesamte Pinolenheinheit 32 und damit die Zentrierspitze 3 mit der Gesamtkraft der beaufschlagten Hydraulikkolben 11 bis 15 nach links gegen das Werkstück gedrückt.

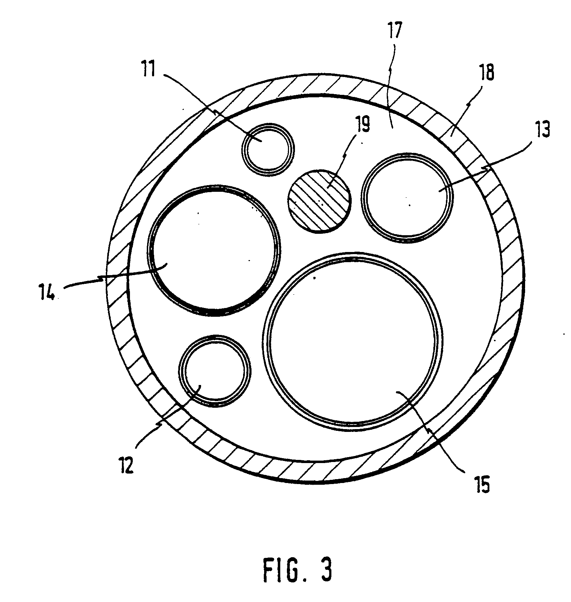

Fig. 3 zeigt eine Aufsicht auf die Stirnseite des Kolbens 17 von der Seite der Preßplatte 10 her, also eine Ansicht A-A gemäß Fig. 1. Aus dieser Fig. 3 ist ersichtlich, daß die Hydraulikkolben 11 bis 15 über die Stirnfläche des Kolbens 17 nach der optimalen geometrischen Verteilung gestreut sind und damit bei Beaufschlagung nur eines oder einzelner dieser Hydraulikkolben unter Umständen auch eine exzentrische Beaufschlagung der Preßplatte 10 gegeben sein kann. Ein Verkanten der Preßplatte 10 wird aber dadurch verhindert, daß die Aussenkontur des Kolbens 17 und die Innenkontur des Zylinders 18 paßgenau über eine große Länge ineinanderlaufen. Die Querschnittsflächen der einzelnen Hydraulikkolben 11 bis 15 sind dabei um den Faktor 2 zueinander gestuft, so daß jeder Kolben eine doppelt zu große Querschnittsfläche wie der nächst kleinere Hydraulikkolben bzw. eine halb so große Querschnittsfläche wie der nächst größere Hydraulikkolben besitzt. Dadurch ist auch die Kraft, die der einzelne Hydraulikkolben entwickelt, bei Beaufschlagung mit gleichem Arbeitsdruck zwischen den einzelnen Hydraulikkolben mit dem Faktor 2 abgestuft.

Jeder der Hydraulikkolben 11 bis 15 verfügt über einen eigenen Anschluß an eine Hydraulikleitung 16, in deren Verlauf sich ein nicht dargestelltes Zweiwegeventil befindet, welches also lediglich eine geöffnete oder eine geschlossene Stellung einnehmen kann. Alle diese Hydraulikleitungen 16 sind mit einer gemeinsamen Druckwelle verbunden. Da die einzelnen, den Hydraulikkolben 11 bis 15 zugeordneten I/O-Ventile sehr leicht auch automatisch ansteuerbar sind, kann bei abgestufter Auslegung der Hydraulikkolben 11 bis 15 für 500N, 1000N, 2000N, 4000N, 8000N durch die Kombination einzelner dieser Hydraulikkolben jede gewünschte Spannkraft im Bereich von 0 bis 15.500 N in Teilschritten von 500N exakt eingestellt werden. Dennoch muß nur ein Druck-Medium eines einzigen Niveaus vorhanden sein, und es sind keinerlei Proportional-Druckventile oder ähnliches notwendig.

Der Kolben 17, in dem die Hydraulikkolben 11 bis 15 geführt sind, stützt sich selbst natürlich wiederum über eine Schulter nach hinten am Grundkörper 1 des Reitstockes ab.

Ebenso wie die Pinoleneinheit 32 und die die Hydraulik zum Vorpressen enthaltende Baugruppe getrennt ausgebildet sind, ist auch die Vorrichtung zum Auspressen und ggfs. Festziehen der Zentrierspitze unterteilt:

Die Pinole 2 weist eine durchgehende Öffnung entlang ihrer Symmetrieachse auf, die im vorderen Bereich kegelig zur Aufnahme der Zentrierspitze ausgebildet ist. Im dahinterliegenden zylindrischen Bereich findet wenigstens ein Übergang von einem größeren zu einem kleineren Durchmesser statt, wobei sich der kleinere Durchmesser über den größten Teil der Länge der Pinole 2 erstreckt. In diesem kleineren Durchmesser ist der Auswerfer 36 axial geführt, der an seiner vorderen Stirnfläche 43 einen größeren Durchmesser aufweist, welcher im Ruhezustand gegen die Schulter am Übergang zwischen dem größeren und kleineren Durchmesser des zylindrischen Bereiches der Durchgangsöffnung gepreßt wird. In dieser von der Zentrierspitze 3 zurückgezogenen Ruhelage wird der Auswerfer 36 dadurch gehalten, daß er am hinteren Ende über die Pinole 2 hinausragt und auf ein Ausengewinde des Auswerfers 36 eine Buchse 38 aufgeschraubt ist. Zwischen dieser Buchse 38 und einer der Verbreiterung der rückseitigen Stirnfläche der Pinole 2 dienenden Platte 37 ist eine Druckfeder 26 gespannt, um nach jeder Betätigung des AUswerfers 36 diesen wieder in seine Ruhelage zurückzubewegen.

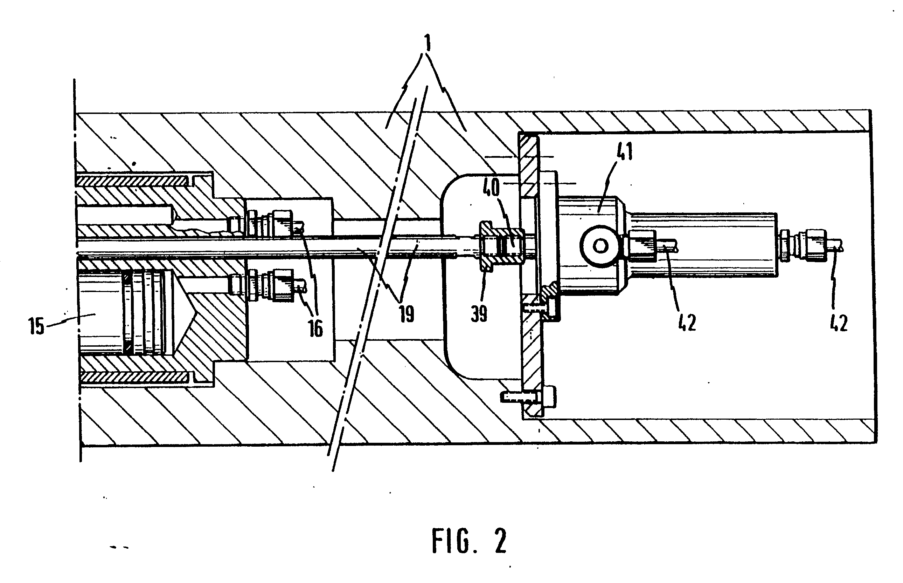

Auf die hintere Stirnseite des Auswerfers 36 bzw. der Buchse 38 muß daher zur Betätigung des Auswerfers axial eine Kraft aufgebracht werden. Dies geschieht durch eine eine Betätigungsstange 19, die in fluchtenden Bohrungen sowohl der Preßplatte 10 als auch des die Hydraulikkolben 11 bis 15 beherbergenden Kolbens 17 axial geführt wird. Die radiale Lage der vorderen Stirnfläche dieser Betätigungsstange 19 ist so gewählt, daß die hintere Stirnseite wenigstens der Buchse 38 erreicht wird. Durch ausreichenden axialen Abstand in der Ruhelage zwischen der Hinterkante der Buchse 38 und der vordersten Kante der Betätigungsstange 19 ist sichergestellt, daß es zu keiner unbeabsichtigten Betätigung des Auswerfers 36 durch die Betätigungsstange 19 kommen kann. Durch eine verbreiterte Stirnfläche der Betätigungsstange 19 gegenüber der Durchgangsbohrung durch die Preßplatte 10 ist sichergestellt, daß bei einem Vorwärtsschieben der Preßplatte 10 die Betätigungsstange 19 jeweils mitbewegt wird. Durch die geringen Verschiebewege sowohl der gesamten Pinoleneinhiet als auch der Preßplatte 10 sowie des einstückig hiermit ausgebildeten Zylinders 18 muß auch der Hydraulikkolben 41, der die Betätigungsstange 91 und damit den Auswerfer 36 bewegt, nur einen geringen Schiebeweg vollziehen können. Deshalb kann auch der Hydraulikkolben 41 selbst relativ kurz ausgebildet sein, wie er im eingebauten Zustand in Fig. 2 im hinteren Bereich des Grundkörpers 1 dargestellt ist. Der Stößel 40 des Hydraulikkolbens 41 ist dabei über eine Buchse 39 mit der Betätigungsstange 19 verschraubt und damit axial fest verbunden. Die Hydraulikleitungen 42 zur Versorgung des Hydraulikkolbens 41 können dabei mit Druckmedium des gleichen Druckniveaus beaufschalgt werden, wie die Hydraulikleitungen 16 zur Versorgung der Hydraulikkolben 11 bis 15.

Falls mit Hilfe des Auswerfers 36 die Zentrierspitze 3 auch in die Pinole hinein gezogen werden muß, da die Handhabungseinheit zum Einsetzen der Zentrierspitze 3 hierfür keine ausreichende Kraft aufbringt, stehen mehrere unterschiedliche Möglichkeiten zur Wahl. Beispielsweise könnte der vordere Bereich des Auswerfers 36 als Elektromagnet ausgebildet sein, so daß zum Hereinziehen der Zentrierspitze 3 der Auswerfer 36 bis zur Berührung mit der Zentrierspitze 3 vorgefahren und gleichzeitig der Elektromagnet in Kraft gesetzt wird, so daß bei der Rückwärtsbewegugn des Auswerfers 36 aufgrund der Kraft der Kraft der Druckfeder 26 die Zentrierspitze 3 solange in den Kegelsitz der Pinole 2 hineingezogen wird, bis die Haltekraft des Elektromagneten überschritten ist.

Ebenso können die vordere Stirnfläche 43 des Auswerfers 36 und die rückwärtige Stirnfläche der Zentrierspitze 3 derart aneinander angepaßt sein, daß sie nach Art eines Bajonettverschlusses zusammen wirken, also durch Relativdrehung der beiden Teile zueinander formschlüssig ineinanderrasten.

## Ansprüche

1. Reitstock für Werkzeugmaschinen mit einem bezüglich der Werkzeugmaschine in und gegen die Spannrichtung verfahrbaren Grundkörper und einer auf dem Grundkörper in und gegen die Spannrichtung verfahrbaren Pinole, in welcher die eigentliche Zentrierspitze auswechselbar axial fest angeordnet ist, **dadurch gekennzeichnet**, daß die Pinole (2) eine zentrale Durchgangsöffnung in Längsrichtung aufweist, in der ein stabförmiger Auswerfer (36) axial beweglich geführt ist, wobei auf dessen rückwärtiger Stirnseite eine hydraulisch beaufschlagte Betätigungsstange (19) einwirken kann, um den Auswerfer (36) mit seiner vorderen Stirnfläche gegen die rückwärtige Stirnfläche der Zentrierspitze (3) zu pressen.

2. Reitstock nach Anspruch 1, **dadurch gekennzeichnet,** daß der Auswerfer (36) sich durch die Kraft einer Druckfeder (26), die sich an der hinteren Stirnfläche der Pinole (2) abstützt, im Normalzustand in einer von der Zentrierspitze (3) zurückgezogenen Position befindet.

3. Reitstock nach Anspruch 1 oder 2, **dadurch gekennzeichnet,** daß
- der hohle Grundkörper (1) in seinem Inneren einen Anschlag aufweist, gegen den die Pinole im Ruhezustand durch die Kraft einer Feder in Spannrichtung gedrückt wird,
- eine im Anschluß an den Anschlag im Inneren des Grundkörpers (1) angeordnete Führung, entlang welcher der Pinole bei Druck entgegen der Spannrichtung gegen die Kraft der Feder vom Anschlag nach hinten bewegt wird,
- im Grundkürper (1) wenigstens ein Endschalter (24) zum Abbremsen und Festklemmen des Reitstockes sowie Ausfahren der Pinole angeordnet sind, die durch die Rückwärtsbewegung der Pinole betätigt werden,
- eine Preßplatte (10) zum Vorwärtsschieben der Pinole samt Zentrierspitze im Grundkörper (1) in und entgegen der Spannrichtung verfahrbar ist und
- daß hinter der Preßplatte (10) mehrere unterschiedlich große Hydraulikkolben (11 bis 35) angeordnet sind, die von der Rückseite her die Preßplatte beaufschlagen können und durch einfache I/O-Ventile angesteuert werden.

4. Reitstock nach Anspruch 3, **dadurch gekennzeichnet,** daß die Hydraulikkolben (11 bis 15) in den zur vorderen Stirnseite hin offenen Bohrungen eines Kolbens (17) geführt werden, auf dessen Aussenkontur die angepaßte Innenkontur eines Zylinders (18) axial verschiebbar ist, der sich an die Rückseite der Preßplatte (10) anschließt und mit dieser einstückig verbunden ist, wobei die Betätigungsstange (19) in fluchtenden Bohrungen der Preßplatte (10) und des Kolbens (17) axial verschiebbar geführt ist.

5. Reitstock nach einem der vorhergehenden Ansprüche, **dadurch gekennzeichnet,** daß sich die Druckfeder (26) an der rückwärtigen Stirnseite der Pinole (2) vermittels einer dazwischen angeordneten Platte (37) und an dem Auswerfer (36) vermittels einer auf dessen rückwärtiges Ende aufgeschraubten Buchse (38) abstützt, die eine der Druckfeder (26) zugewandte Schulter aufweist.

FIG. 1

EP 0 382 942 A2

FIG. 2

EP 0 382 942 A2

EP 0 382 942 A2

FIG. 3